# EUROPEAN PATENT APPLICATION

(11) **EP 3 889 645 A1**
(43) Date of publication of application: **06.10.2021**
(21) Application number: 18941399.0
(22) Date of filing: 27.11.2018
(51) Int. Cl.: G01S 17/89

(54) **AIRBORNE COLOUR OPTICAL SCANNER**

(71) Applicant: Aerolaser System S.L., 35010 Las Palmas de Gran Canaria (ES)
(72) Inventor: HERRERA AZORÍN, Tomás, 35010 Las Palmas De Gran Canaria (ES); LUQUE SILLERO, José María, 14520 Fernán Nuñez Córdoba (ES); ESPER-CHAÍN FALCÓN, Roberto, 35308 Santa Brigida Las Palmas (ES); MEDINA ESCUELA, Alfonso, 35300 Santa Brígida Las Palmas (ES); FARIÑA SANTANA, Esteban David, 35019 Las Palmas Las Palmas (ES)
(74) Representative: Del Valle Valiente, Sonia
(86) International application number: PCT/ES2018/070759
(87) International publication number: WO 2020/109633

(57) **Abstract**

An AIRBORNE COLOUR OPTICAL SCANNER with a Flash-LADAR system, with a laser (2), optics (4), a beam splitter (9) aimed at a first detector (12), a rotating primary mirror (67), a holed secondary mirror (20) through which the emitted laser pulse passes, a detection system with a pulse detector (25) and an electronic unit with a timer system (467), a microcontroller (73), user interface (80), amplification and filtering (651), power distribution (82), power source (72) and connector (79), wherein the detection system, in addition to the pulse detector (25) comprises a colour detector (43) and means, preferably a dichroic mirror (19) with a selective wavelength, which separate the spectral components of the return laser pulse from the spectral components corresponding to the colours, causing the spectral components of the pulse to impact on said pulse detector (25) and the spectral components of the colours on the colour detector (43).

## Description

### OBJECT OF THE INVENTION

As expressed by the title of the present specification, the invention relates to an airborne colour optical scanner which adds to the function for which it is intended certain advantages and features described in detail below which constitute a noteworthy novelty in the current state of the art.

More specifically, the object of the invention is focused on an airborne optical scanner based on Flash-LADAR (Laser Detection and Ranging), able to acquire a geo-located point cloud with colour information. This point cloud can be used for processing contour and generating contour lines for digital orthophotos, or as a basis for creating a high-resolution 3D scene based on high-resolution images taken.

### FIELD OF APPLICATION OF THE INVENTION

The field of application of the present invention falls within the sector of the industry focusing on the manufacturing of image capturing systems and mapping systems, specifically focusing on those which are based on laser technology and, likewise, on those which are intended for airborne application to capture aerial images and for aerial mapping.

### BACKGROUND OF THE INVENTION

As is known, the operating principle of LADAR (Laser Detection And Ranging) systems [1], [2], on which the present invention is based, consists of measuring distance by calculating the time that elapses from the moment laser pulse is emitted to when it is received, after having impacted on the target, which is known as the ToF (Time of Flight). LADAR technology is widely used in sectors such as the military [3], [4] space [5], civil topography or in self-driving vehicles [6], [7].

Three types of LADAR systems can be distinguished: fixed, which allow distances of a scene to be measured with a high point density and low time restriction for acquiring samples. Airborne systems for capturing the orography of the terrain, in which a high point density in a single pass is required. And terrestrial mobile systems used in mobile-mapping [8], [9], passive vehicle security systems [10], [11] or self-driving vehicles [12], [13]. On some occasions, for mapping applications, along with the LADAR system, high-resolution cameras or infrared cameras are included. Capturing these images complements the data package, and it is possible to create high-resolution scenes combining the point cloud with high-resolution images.

The operating principle of a LADAR system, in its most simplified version, is based on using a single laser beam, used for measuring distance by calculating the time that elapses from the moment the laser pulse is emitted to when it is received, after having impacted on the target, which is known as the ToF (Time of Flight). Therefore, the laser emits a short-duration pulse (approximately nanoseconds) at a specific frequency, between 100kHz and 1000kHz. This laser pulse passes through a set of optical lenses with the aim of obtaining a spot size, commonly called footprint, at a specific distance. Before the laser beam leaves the LADAR system, the time at which the beam has left is recorded by means of a detector. The generated beam leaves the LADAR system and once it reaches the target a fraction of the power of the laser is reflected by the target. The level of energy reflected depends on the material that the target is made up of. The fraction of energy reflected reaches the LADAR system again, where an optical system concentrates the energy received in a high-efficiency detector, which transforms this energy into an electric pulse, allowing the time at which the pulse has arrived to be determined. To determine the ToF, the difference between the emission time and the reception time is taken by an electronic device called TDC (Time to Digital Converter).

The final aim of LADAR systems is to create a point cloud that represents a 3D scene, such as a room, an outdoor area or a terrain. Regardless of the final application, the laser emission and receiving system must observe the area to be sampled, which requires movement that allows for this 3D scene to be obtained. One of the most commonly used strategies by single beam LADAR devices is based on the use of a rotating mirror. This allows the area to be sampled to be observed to be able to send and receive the laser beam, maintaining the laser emission system and the detector fixed. In this case, the system carries out 360° linear sweeps, and to scan the desired area, the device is installed in a vehicle, which moves at a known speed, thereby obtaining the cloud point of the scene.

One fundamental aspect of LADAR devices is the point density they are able to sample. To increase the point density of the cloud, different strategies are used, the most immediate being to increase the frequency of the laser pulse and to reduce the rotation speed of the mirror system and the speed of the vehicle. However, this is not always possible due to the limitations in the laser system or the limitations in the minimum speed of the vehicle, such as in a light aircraft. Another way to increase the point density in single laser beam systems is by limiting the sampling angle. To do so, a more complicated mirror system is used, based on polygon mirrors [2], or systems of prisms that deflect the beam when they rotate, known as Risley prisms [14], [15].

Another way to increase the point density is to use detector arrays and, this way, with a single laser pulse, a multitude of points is acquired, yet at the cost of increasing the complexity of the electronic detector system. This type of implementation is called Flash-LADAR. In this case, the optical system that accompanies the laser emission system must increase the footprint the laser prints on the target. Therefore, it is necessary to use more powerful lasers with the aim of being able to receive the necessary energy in each detector, given that the energy of the pulse is distributed in the footprint. There are solutions that increase the energy of the optical radiation of the footprint using arrays of laser emitters [6].

With regard to airborne Flash-LADAR, it is important to consider that the path the aircraft must travel must be optimised due to the cost of the flight, and generally, the conditions of the sample acquisition are selected in order to make only one flight pass. In said flight operations, samples are overlapped in order to prevent blind spots in the point cloud. Therefore, it is essential in a single flight operation to acquire the greatest possible point density and thereby obtain high data resolution.

With regard to the detector system, high-efficiency and high-gain detectors are frequently used, such as Avalanche PhotoDiodes, to which a high voltage is applied in order to achieve current gains to the order of 1000. This allows the weak signal received from the reflection off the target to be received. In the case of Flash-LADAR devices, the detectors are arranged in APD arrays, similar to a CCD (charge-coupled device) camera, wherein each photodetector represents a portion of the return of the laser footprint reflected by the target. It is necessary to take into account the dependence on the final resolution of the system as a function of the diameter of the footprint in the field of vision (FOV) of the receiving system. To increase this resolution in LADAR systems with only one detector, beam divergence is decreased, reducing the diameter of the laser footprint in the target. When detector arrays are used, the resolution is determined by the field of vision of each detector, due to the fact that each detector element receives a portion of the reflected radiation. In this case the laser footprint on the target must cover all elements of the detector.

The electric response of the detectors is filtered to eliminate noise, before transferring it to the electronic system in charge of counting the time between the pulse emission and its reception. There are commercial electronic devices that perform this function, known as time to digital converters (TDC), although it is possible to implement them in systems such as FPGA's (field-programmable gate arrays). The time resolution of these devices will determine the spatial resolution of the system, able to reach picoseconds, which is equivalent to a spatial resolution of centimetres or millimetres.

The volume of data generated in a Flash-LADAR device is stored along with time data, which allow the direction in which the laser was pointed when the pulse was emitted to be synchronised. A GPS system and an inertial measurement unit (IMU) provide information on the behaviour of the device (position, pitch, tilt and yaw) at the moment of the pulse emission, with the aim of locating each point of the cloud. When high-resolution images are taken to create 3D scenes, the images are joined with the point cloud. Although there are specialised computer programs responsible for automating this task, there are occasions when it is necessary to do this manually. To increase the number of points that relate the datum taken by the LADAR system to the high-resolution image, it would be convenient to have the colour value of the LADAR point. This would further allow 3D scenes in real colour to be created, without the need to install high-resolution cameras, which would reduce the costs associated with the operation of taking samples, or could be used on aircraft with limited weight capacity, such as drones.

Therefore, the object of the present invention is to develop an optical scanner with the Flash-LADAR system which, in addition to acquiring ToF data, is able to acquire colour information for each point.

Furthermore, and in reference to the current state of the art, it is worth mentioning that although, as previously noted, there are devices that are similar to the present invention, the applicant is unaware of any other airborne colour optical scanner or similar invention that has the same or similar technical features to the ones claimed in the present invention.

### DESCRIPTION OF THE INVENTION

The airborne colour optical scanner proposed by the invention is thus configured as a remarkable novelty within its field of application, given that, in light of the implementation thereof, the previously described ideal objectives are exhaustively met in a satisfactory way, the characterising details which distinguish the invention and allow said novelty to be achieved being conveniently included in the final claims attached to the present description.

Specifically, and as was previously mentioned, the invention proposes an airborne optical scanner that is based on Flash-LADAR technology and is distinguished by the fact that it is configured by means that make it able to acquire a geo-located point cloud with colour information, which advantageously can be used for processing contours and generating contour lines for digital orthophotos, or as a basis for the creation of a 3D scene with a very high resolution from high-resolution images taken.

More specifically, the proposed scanner is a device able to acquire a colour datum for each point taken, as well as the standard time of flight (ToF) measurements. This colour value allows the ToF value to be related to the position in high-resolution images in an automated way, or, if required by the application, this system allows a point cloud with acquired colour to be obtained, which allows colour 3D scenes to be achieved with the resolution of the point cloud. To do so, the scanner is essentially configured from a laser emission system, a receiving system and an electronic system that process the signals receive and manage the device.

The emission system is made up of a pulsed laser source, a set of optical lenses that adjust the output beam divergence to obtain a suitable footprint size in a specific operational range.

To capture the moment at which the laser beam is emitted by the LADAR system, the laser system usually has a low-power signal that is used as a reference for the beginning of the pulse. In the case that the laser system does not have this signal, in the output optical path of the laser beam, a small percentage of the radiation is deflected towards a detector, used to detect the moment at which the laser pulse is fired.

At the laser pulse output there is a mirror system, a primary mirror, which deflects the output laser beam towards the target. This primary mirror rotates constantly and, as it deflects the beam, it receives the pulse reflected by the target and directs it towards a secondary mirror of the detector system which distinguishes the device of the invention. This secondary mirror has a hole through which the emitted laser pulse passes, having the same optical axis.

For the secondary mirror of the detector system, an off-axis parabolic mirror is used, which concentrates and deflects the pulse returned by the target 90° to a set of colour sensors/detectors. Specifically, in the aforementioned detector system the spectral components of the laser pulse are separated from the spectral components corresponding to the colours by means of a dichroic mirror. The optically filtered laser pulse reaches a set of high-gain detectors, wherein the signal is electrically amplified and filtered, which allows it to be acquired to calculate the time difference between the pulse emission and reception. The spectral components corresponding to colour reach the RGB colour sensors, where the signal is amplified and filtered to be sent to the electronic system incorporated by the device and which samples the colour information at a high speed, with the aim of synchronising the arrival of the laser pulse with the colour value at the precise moment.

The electronics of said system are in responsible for controlling the device and managing the data flow out of the device to be stored. Moreover, the electronics electrically power all of the components of the system, such as the laser, the rotating motor of the rotating primary mirror and the detectors.

The airborne colour optical scanner described thus represents an innovative structure with structural and constitutive features that were heretofore unknown for the purpose it fulfils, reasons which, in addition to the practical usefulness thereof, provide sufficient grounds for obtaining the exclusive privilege sought.

### DESCRIPTION OF THE DRAWINGS

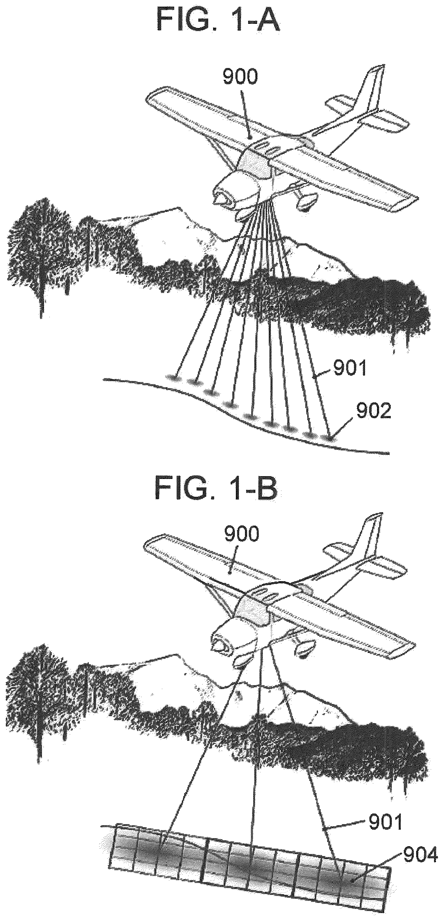

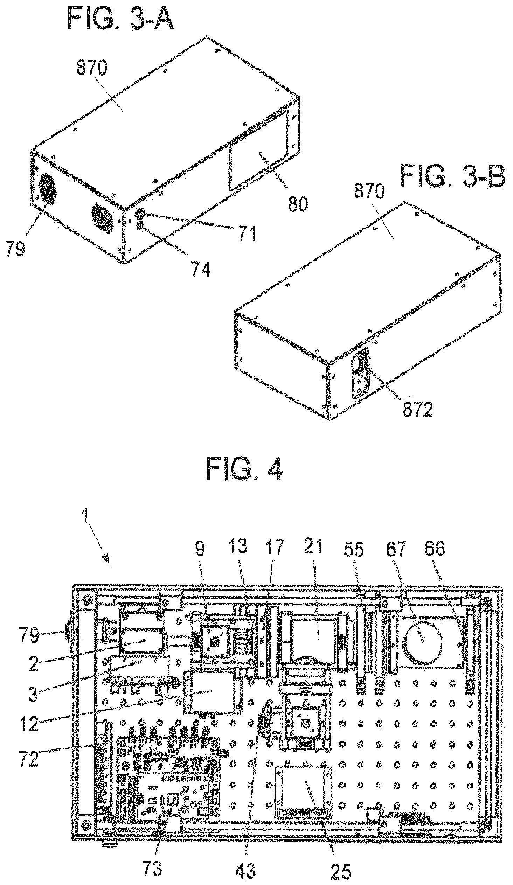

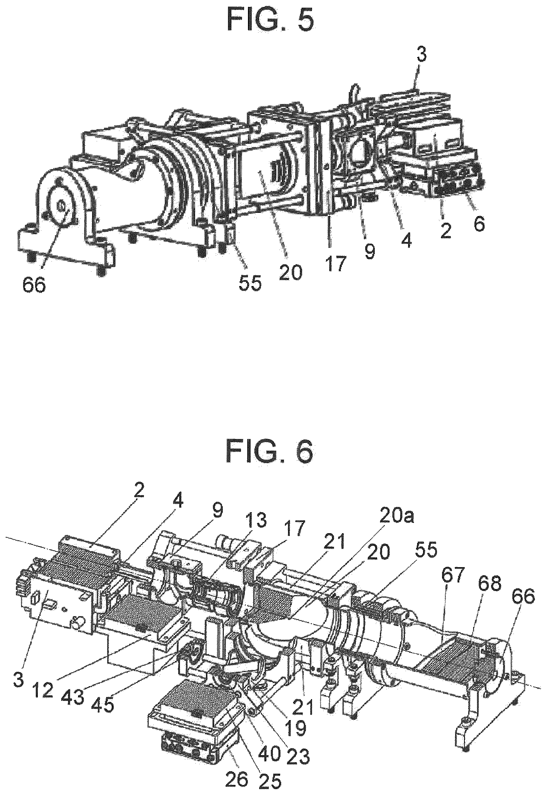

To complement the description and for the purpose of aiding a better understand the features of the invention, sheets of drawings are attached to the present specification as an integral part thereof, in which the following is depicted in an illustrative and non-limiting manner:
Figures number 1-A and 1-B show representative views of the operation of an aircraft used, figure 1-A showing a device with a LADAR system using a single laser beam and figure 1-B showing a device with the Flash-LADAR system, showing the difference in the footprints collected.
Figure number 2 shows a block diagram of the airborne colour optical scanner, object of the invention, which uses the Flash-LADAR system with colour information, showing the main parts and elements it comprises, as well as the output and return path of the laser beam it emits and detects.
Figures number 3-A and 3-B show perspective views, of both sides, respectively, of an example of the airborne colour optical scanner according to the invention, housed inside the casing that protects it, showing the external configuration of the same.
Figure number 4 shows an upper plan view of the box of the scanner of the invention, according to the example shown in figures 3-A and 3-B, in this case shown without the top cover of the casing, showing all of the elements comprised therein as well as the arrangement of the same inside said casing.
Figure number 5 shows a perspective view of the complete optical assembly which comprises the laser emission system, the receiving system and the detector system of the scanner of the invention, in this case shown outside of the casing, showing the main elements it comprises, as well as the configuration and arrangement thereof.
Figure number 6 shows a cross-sectional perspective view, according to a longitudinal cut at a right angle, of the optical assembly shown in figure 5, showing some details of the internal configuration thereof, in particular the configuration of the mirrors, as well as the hole in the axial axis of the secondary mirror.
Figure number 7 shows a perspective view of the laser emission system of the scanner of the invention, in this case also shown outside the casing and separate from the rest of the elements of the optical assembly, showing the main parts and elements it comprises.
Figure number 8-A shows a perspective view of the detector system of the scanner, according to the invention, likewise represented independently from the rest of the systems of the optical assembly, in order to facilitate the observation of the parts and elements thereof.
Figures number 8-B and 8-C respectively show a detailed enlargement of the point of the detector system which incorporates the array of APD detectors and a front view of said detector array, showing its reticular arrangement.
Figure number 9 shows a side elevation view of the boards that make up the electronic unit of the scanner of the invention, showing the stacked arrangement of the same.

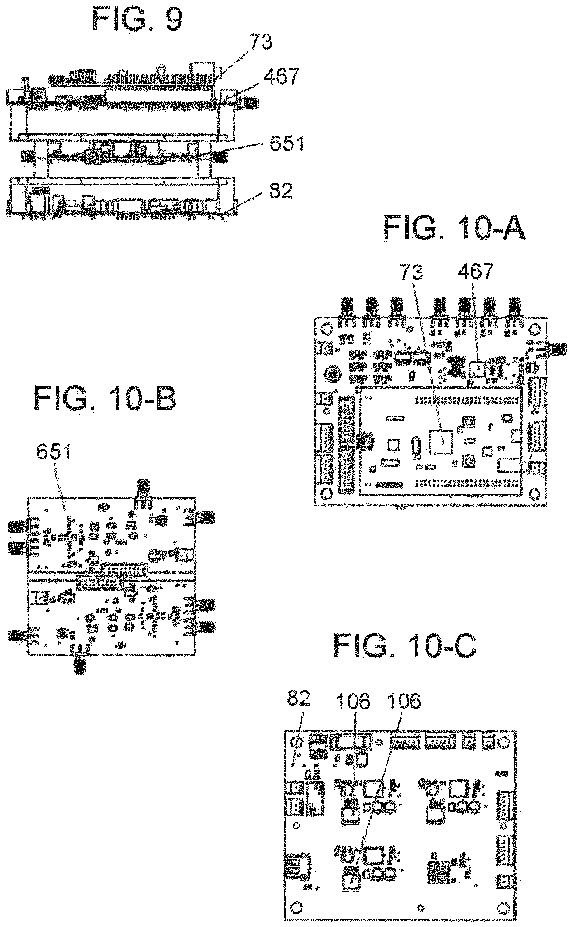

And figures number 10-A, 10-B and 10-C show respective plan views of each of the boards that make up the electronic unit shown in figure 9, showing the configuration of each one of them. Specifically figure 10-A shows the microcontroller board and the TDC, figure 10-B shows the signal amplifier board and figure 10-C shows the power distribution board.

### PREFERRED EMBODIMENT OF THE INVENTION

In light of the aforementioned figures, a non-limiting example of the airborne colour optical scanner of the invention is shown, which comprises the parts and elements indicated and described in detail below, according to the numbering used in the following list:
- (1): scanner
- (2): laser head
- (3): laser controller
- (4): optical lenses of the collimator
- (6): first micropositioner
- (9): beam splitter
- (11): support
- (12): first detector
- (13): beam expander
- (17): second micropositioner
- (19): dichroic mirror
- (20): secondary mirror (20a) hole
- (21): secondary mirror cover
- (23): narrowband optical filter
- (25): pulse detector
- (26): third micropositioner
- (40): first optical group
- (43): colour detector
- (45): second optical group
- (46): detector array
- (55): hollow axial bearing
- (66): motor
- (67): flat primary mirror
- (68): primary mirror adapter
- (71): external indicator
- (72): power source
- (73): microcontroller
- (74): Laser security key
- (79): power connector
- (80): user interface
- (82): electronics to power the system
- (91): electric cables
- (92): data signal connection
- (106): regulation elements
- (109): signal digitisation system
- (467): timer system
- (651): amplification and filtering system
- (870): Casing
- (872): Opening for output laser and for signal reception
- (900): aircraft
- (901): output laser beam
- (902): footprint point
- (903): reflected pulse
- (904): Flash-LADAR footprint area
- (O): target
- (D): external devices

Thus, in reference to figures 1-A and 1-B, it is evident how a device transported on an aircraft (900) with a LADAR system (figure 1-A) uses a single laser beam (901), which emits a short-lasting pulse at a specific frequency, passing through a set of optical lenses with the aim of obtaining a footprint size (902), at a specific distance, which will move with a rotating mirror to achieve a specific footprint point density (902), and as in the case of the device with the Flash-LADAR system (figure 1-B), thanks to the use of the detector array, with a single laser pulse (903) an entire footprint zone (904) is achieved with a multitude of points.

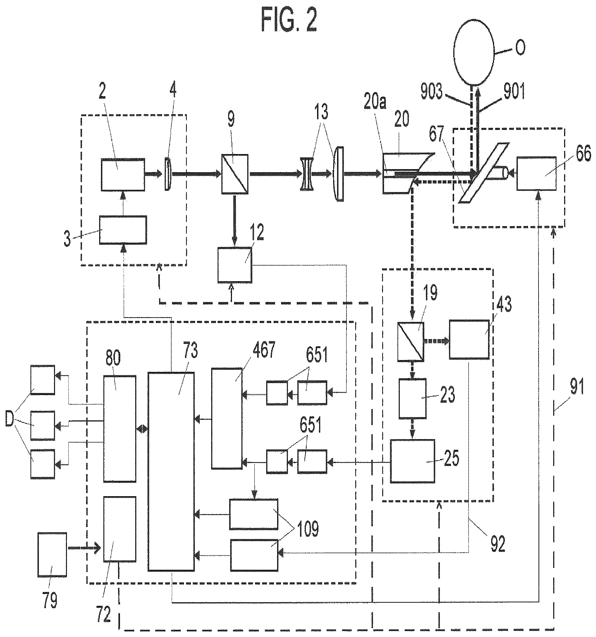

In turn, as shown by the rest of the figures, in particular figure 2, the scanner device (1) of the invention, based on the Flash-LADAR system, incorporates a series of innovative elements that improve the effectiveness of the same with respect to the devices that incorporate said system, since it is thereby able to acquire colour information of the footprint obtained when collecting a colour datum of each point taken, and therefore comprises the following.

Specifically, the scanner (1), preferably housed inside a casing (870) which will conveniently be incorporated in the aircraft (900), has, in a known way, an optical assembly, which is made up of a laser emission system, a receiving system and a detector system, and has electronics that control said systems of the device, with the particular feature in that the detector system envisages the inclusion of pulse detectors (25) and colour detectors (43) and means (19) for separating the spectral components of the return laser pulse of the spectral components corresponding to the colours.

More specifically, in the optical assembly shown in figures 5 and 6, separated from the rest of the elements, the laser emission system envisages the existence of a pulsed laser source (2, 3), a set of optical lenses (4) that adjust the output beam divergence to obtain a suitable size of the footprint area (904) in a specific operational range, after which a beam splitter (9) is envisaged, which deflects a part of the laser beam to a first detector (12), used to detect the moment at which the laser pulse is fired.

At the laser pulse output, after the aforementioned splitter (9) there is a mirror system, wherein a primary mirror (67), conveniently situated, deflects the output laser beam (901) to the target (O). This primary mirror (67) is associated with a motor (66) that makes it constantly rotate, and in the same way that it deflects the beam, it receives the pulse (903) reflected by the target and aims it toward a secondary mirror (20) of the detector system that has a hole in order to be passed through by the emitted laser pulse, since it shares the same optical axis, as can be seen in figure 2 and in figure 6.

Furthermore, the secondary mirror (20) of the receiving system is an off-axis parabolic mirror, which concentrates and deflects the pulse returned by the target 90° towards a set of detectors (43, 25) of the detector system, with the particular feature that at the entrance of the beam in said detector system the existence of a dichroic mirror (19) has been envisaged which separates the spectral components of the laser pulse from the spectral components corresponding to the colours, separating the latter toward a colour detector (43) formed by RGB colour sensors, while the rest of the components pass through the same and go through a narrowband filter (23) to eliminate residual spectral components, and go to a pulse detector (25) formed by a detector array (46) wherein the signal is amplified and filtered to acquire the time difference between the pulse emission and the reception thereof in the electronic unit where the pulse signal is sent.

In turn, the spectral components corresponding to the colour reach the aforementioned RGB colour sensors of the colour detector (43), where the signal is amplified and filtered to be sent to the electronic unit which samples and stores the colour information at a high rate, with the aim of synchronising the arrival of the laser pulse with the colour value at the precise moment.

Said electronic unit, shown in greater detail in figure 9 and 10, is in charge of controlling the system and managing the flow of data outside the device for storage, as well as electrically powering all of the components of the device, such as the laser (2), rotating motor (66) of the mirror (67) and detectors (25, 43, 12), for which it essentially comprises a first electronic board with a timer system (467) and a microcontroller (73) which connects to the user interface (80) with the corresponding connection port to connect the necessary external recording, reproduction and storage devices (D), a second board with an amplification and filtering system (651) for the signal received, and a third board with power distribution electronics (82) and other regulation elements (106) that are joined to a power source (72) and to a connector (79) to connect to the current.

Thus, the operation of the scanner (1) is the following:
The scanner (1) emits laser pulses at a Ai wavelength and for a duration shorter than 10 ns, with a ξi pulse energy, thanks to the laser emission system made up of a controller (3) and a laser head (2). Both the duration and frequency of the pulse can be modified based on the needs of the measurement that will be taken by the device. The emission laser beam has a high divergence, and thus it is necessary to collimate it by means of a lens system (4). In the preferred embodiment, an aspherical lens situated very close to the laser output (2), as well as an expander (13), is used to reduce beam divergence. The selection of this lens assembly must be done as a function of the size of the desired Flash-LADAR footprint size (904). The laser head (2) is situated on a first micropositioner (6), which allows it to carry out a fine adjustment both of the angle and the vertical and lateral position of the output beam, with the aim of making the output optical axis coincide with the incoming optical axis. After collimating the output beam, and before the expander (13), a beam splitter (9) is situated, which deflects a reduced fraction of optical power to a first detector (12) situated on a support (11) to align the detector (12) with the beam. In this detector (12), the current response is amplified and converted to voltage, being used in the electronic unit to which it is connected, as a synchronism signal to precisely determine the moment in time in which the laser pulse is fired.

Once the laser beam is expanded, it reaches the rear part of the secondary mirror (20), which has a hole (20a), through which the laser beam passes. This way, both the emission and reception system share an optical axis. The size of said hole will depend on the diameter of the emission beam at the output of the expander (13). The secondary mirror (20) is situated on a second micropositioner (17), which allows the angle of the optical axis to be adjusted. The secondary mirror (20) is also protected by a cover (21) that prevents outer reflections that do not correspond to the image of the target to be detected, and also protects it from blows or particles from penetrating the same.

Once the emission beam passes through the secondary mirror (20), it reaches the rotating system of the primary mirror (67) which deflects the beam at the proper angle at each moment, which will lastly exit the device through the opening for the output and reception of the signal (872). In the preferred embodiment, the rotating primary mirror (67) deflects the beam in a range of 360°. To do so, the primary mirror (67), which is flat, is inclined at 45°, which deflects the beam 90°. This used rotating primary mirror (67) is preferably secured at two points, one thanks to a hollow axial bearing (55), which leaves the optical path clear, both for emission and reception. The second fastening point is at the opposite end, and is responsible for securing the motor (66), which moves it in a rotational direction.

As can be seen in figure 6, an adapter (68) is coupled to the motor shaft (66), which allows the primary mirror (67) to be fastened and which, in turn, can incorporate another micropositioner to adjust the angle of the mirror with respect to the optical axis. The motor (66) of the rotating system is controlled by the electronic unit, to which the microcontroller (73) is connected, to be able to configure the rotation revolutions to reach the desired point density in each measuring operation.

The beam (904) reflected off the target reaches the flat primary mirror (67), deflecting it 90° to the secondary mirror (20). In this proposed design, the secondary mirror (20) is an off-axis parabolic mirror, which deflects the input image 90° and focuses it at a distance that is the same as its focal length. The secondary mirror (20), as was previously mentioned, can be fastened to a second micropositioner (17), which allows the focal point to be adjusted in the detectors (25, 43).

In the optical reception path, after deflecting the image in the secondary mirror (20), a dichroic mirror (19) with a selective wavelength divides the spectral components of the laser beam from the spectral components corresponding to colour. The selection of this dichroic mirror must be such that it is transparent at the Ai wavelengths of the laser beam and reflects the wavelengths corresponding to the colours, in other words, between 780-380 nm.

The signal corresponding to the reflection of the pulse that passes through the aforementioned dichroic mirror (19) is filtered in an optical filter (23) with a very narrow band, in the order of nanometres, with the aim of eliminating the spectral components that do not correspond to those of the λi laser emission. The filtered laser pulse can optionally be treated by means of a first optical group (40) to eliminate optical aberrations and thereby obtain better image quality in the pulse detector (25).

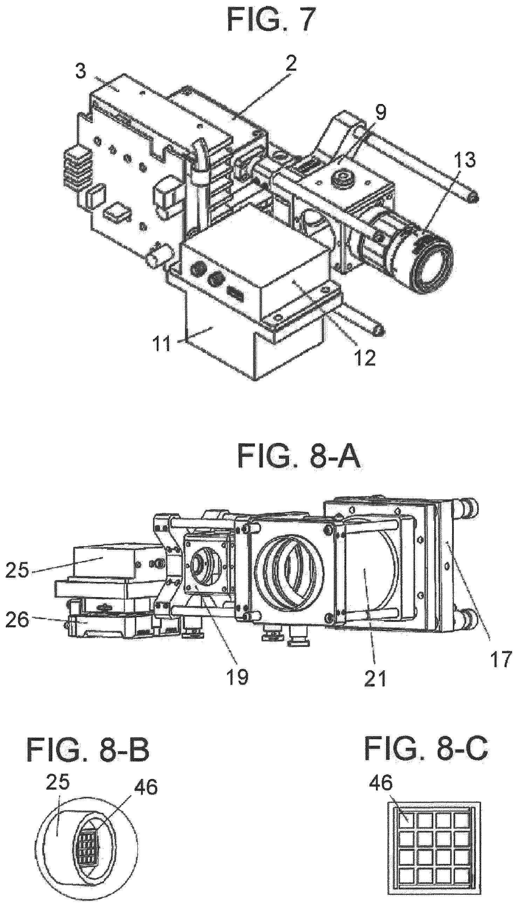

The filtered laser pulse reaches the pulse detector (25), which, as can be seen in figures 8-A, 8-B and 8-C, is made up of an array of 4x4 high gain or Avalanche (APD) detectors (46). This detector array (46) of the pulse detector (25) is situated on a third micropositioner (26) with the aim of adjusting the position thereof with the focal point of the secondary mirror (20). Each element of the detector array (46) encompasses a viewing angle, acquiring a portion of the reflection of the laser footprint on the target, which depends on the size thereof and the receiving optical system. At the exit of the cited detectors (46) there is an electronic circuit for amplifying and filtering (651), which amplifies and transforms the current signal to voltage in the electronic unit, to later be filtered. Lastly, said electronic unit has another board with a timer system (467), which records the time in which the pulse is received from each detector. In addition to the timer system (467), an analogue to digital converter with a high sampling rate is used, with the aim of determining the signal level received, and thereby infer the reflectivity of the target material.

In turn, the spectral components corresponding to the visible spectrum which are reflected by the dichroic mirror (19) pass through a second optical group (45), which reduces optical aberrations of the image received, improving the image quality, and adapts the image size to the colour detector (43) arranged after the same.

Preferably, the colour detector (43) uses a Bayer-type colour filter array to determine the colour of each area. Another option would be the use of an optical colour separator system, formed by a Phillips-type trichroic prism [16], in which it is necessary to use three independent detectors. In any case, the colour detector (43) uses a photo-detector array, wherein the signal of each detector is amplified and filtered in the amplification and filtering board (651) before being processed by the timer system (467), the digitalisation system (109) and the microcontroller (73) of the electronic unit, to obtain colour for each pixel.

Thus, the electronic unit is in charge of controlling all of the components of the system. The main element is the microcontroller (73), housed in a first board that controls each element of the system. The microcontroller (73) is in charge of configuring the state of the system based on the commands it receives from the outside through the user interface (80). This allows the measurement conditions to be configured, to be started and stopped, as well as for measurement data to be sent outside to be processed and stored.

The microcontroller (73) has a connection with the laser controller (3), which allows the width of the pulse to be configured, as well as the frequency of the pulse repetition and the energy in each pulse. Given that the energy of each pulse is able to be configured, it is possible to adapt it to the measurement distance, given that, for targets made up of the same material, the energy received is reduced with the square of the distance. For safety reasons, to indicate the whether the laser is on or off, the electronic unit activates an external indicator (71) provided in the scanner when the laser is turned on, as long as the laser security key (74) is activated.

The electronic unit further has a timer system (467), which is a high-speed electronic system that records the moment at which the pulses are produced, and the moment at which each element of the detector array (46) detects them. This way, it is able to calculate the elapsed time and, therefore, the distance the pulse has travelled. This task can be done using field-programmable gate arrays (FPGAs), or devices known as time to digital converters (TDCs). To optimise the response of the detectors, the electronic unit is able to configure parameters that affect the gain and speed of the response of the detectors (43, 25) to adapt the measurement conditions to the amplification and filtering system (651), with the aim of delivering a signal to the timer system (467) which allows the arrival of a return pulse to be precisely determined.

Along with the system for calculating ToF, the pulse received is digitised using high-speed digital analogue converters, with the aim of calculating the reflectivity of the material off which the laser pulse is reflected. In this way, along with the colour, distance and reflectivity information, it is possible to infer the nature of the material at each point, allowing statistical data to be obtained of the acquired area.

Due to the fact that it is impossible to use the pulse received as a trigger signal for acquiring colour data, the electronic unit digitises the signal of each colour detector (43), and stores it in a data buffer. In this way, when a return pulse is received, it is possible to retrieve the colour value from the data buffer for the exact moment at which the return pulse was received. This colour value is stored along with the data on time of flight, reflectivity and the moment the pulse is emitted.

In the case that there are different distances in the section of the footprint corresponding to a detector, the detector system will receive several pulses. In this case, just as for a single return pulse, the levels related to the signal received, reflectivity and the colour of each point are taken.

Once the microcontroller (73) has all of the data corresponding to the return pulse, these data are stored in a storage system external to the device, connected thereto by means of a high-speed communication interface. Furthermore, to manage the state of the device at all times, it is possible to connect the device to an external device (laptop/computer/terminal), wherein a software shows the instantaneous state of the device, and from which the measuring operation is configured.

The electronic unit also has the aim of electrically powering all of the components of the system, and therefore it receives the external energy through a connector (79) that powers the system at 220 V. This power voltage is transformed to 12V by a power source (72). From a voltage of 12V, the electronic distribution board of the power system (82) has regulation elements (106) that generate the necessary voltages to power each subsystem at the suitable voltage level thereof.

Lastly, it is worth mentioning that the scanner (1) described is secured to an aluminium structure or casing (870) that provides a frame where the different systems are fastened. The structure can include a vacuum system for the purpose of keeping the atmosphere free of waste and preventing condensation in the optical elements that will hinder performance. Furthermore, said systems are conveniently connected to one another by means of electric cables (91) and data signals (92), respectively shown in the diagram of figure 2 by a thin dashed line and a thin continuous line, while said diagrams show the output laser beam (901) represented by a thick continuous line and the return pulse (903) by a thick dashed line, in order to facilitate understanding of the operation of the scanner (1) described.

Having sufficiently described the nature of the present invention as well as the manner of putting it into practice, it is not considered necessary to extend the description in order for a person skilled in the art to be able to comprehend its scope and the advantages derived therefrom, and it is hereby stated that it may be put into practice through other embodiments which differ in detail from the indicated example provided that the essential nature thereof is not modified.

### REFERENCES

[1] N. J. Krasutsky, L. G. Minor, and E. M. Flowers, "Laser radar scanning system," US5200606A, 06-Apr-1993.
[2] E. S. Cameron, R. P. Szumski, and J. K. West, "Lidar scanning system," US5006721A, 09-Apr-1991.
[3] E. A. Teppo and L. R. Haugen, "Gimballed active optical system," US4024392A, 17- May-1977.
[4] N. J. Krasutsky and L. G. Minor, "Laser radar transceiver," US5224109A, 29-Jun- 1993.
[5] R. P. Earhart, R. M. Craig, C. J. Grund, I. J. Gravseth, X. Huang, and C. S. Weimer, "Flash LADAR system," US7961301B2, 14-Jun-2011.
[6] D. S. Hall, "High definition lidar system," US7969558B2, 28-Jun-2011.
[7] P. Gilliland, R. Stettner, L. Heughebaert, and B. M. Goldstein, "Flash ladar collision avoidance system," US20140160460A1, 12-Jun-2014.
[8] D. S. Breed, "Mobile mapping system for road inventory," US20130293716A1, 07- Nov-2013.
[9] N. El-Sheimy and A. Al-Hamad, "Mobile mapping system," US20170227361A1, 10- Aug-2017.
[10] M. Spies and J. Spies, "Car passive security system combines precrash sensor with airbag acceleration sensor to release safety devices," DE10234624A1, 13-May-2004.
[11] 3, "SECURITY SYSTEM WITH WIDE RANGE USING LiDAR," KR101707033B1, 27-Feb-2017.
[12] R. Bergholz, K. Timm, and H. Weisser, "Autonomous vehicle arrangement and method for controlling an autonomous vehicle," US6151539A, 21-Nov-2000.
[13] M. J. Delp, "Autonomous vehicle refueling locator," US9400500B2, 26-Jul-2016.
[14] Y. Zhao and Y. Yuan, "First-order approximation error analysis of Risley-prism-based beam directing system," Appl. Opt., vol. 53, no. 34, pp. 8020-8031, Dec. 2014.
[15] Y. Li, "Third-order theory of the Risley-prism-based beam steering system," Appl. Opt., vol. 50, no. 5, pp. 679-686, Feb. 2011.
[16] H.-S. Kwok et al., "Trichroic prism assembly for separating and recombining colors in a compact projection display," Appl. Opt., vol. 39, no. 1, pp. 168-172, Jan. 2000.

## Claims

1. AN AIRBORNE COLOUR OPTICAL SCANNER that, being of the type based on the LADAR or Flash-LADAR system and comprising a laser head (2), a set of optical lenses (4) that adjust the output beam divergence to obtain a suitable size of the footprint area (904) in a specific operational range, after which a beam splitter (9) is envisaged that deflects part of the laser beam to a first detector (12), used to detect the moment at which the laser pulse is fired, a rotating primary mirror (67) by means of which it deflects the output laser beam (901) to the target (O) and receives the reflected pulse (903) directing it to a secondary mirror (20), with a hole (20a) in order to be passed through by the emitted laser pulse, and which in turn concentrates and deflects the pulse returned by the target 90° to a detector system, with a pulse detector (25) formed by a detector array (46) wherein the signal is amplified and filtered in an electronic unit to which the signal of the pulse is sent, which is provided with a timer system (467), microcontroller (73), which connects to a user interface (80) amplification and filtering components (651) and power distribution electronics (82) and other control elements (106) joined to a power source (72) and a connector (79), is **characterised in that** the detector system, in addition to the pulse detector (25), comprises a colour detector (43) and means (19) that separate the spectral components of the return laser pulse from the spectral components corresponding to the colours, which are situated before said detectors (25, 43), such that the spectral components of the pulse impact on said pulse detector (25) and the spectral components of the colours impact on the colour detector (43).

2. THE AIRBORNE COLOUR OPTICAL SCANNER, according to claim 1, **characterised in that** for means for separating the spectral components of the return laser pulse from the spectral components corresponding to the colours, the existence of a dichroic mirror (19) with a selective wavelength has been envisaged at the input of the detection system.

3. THE AIRBORNE COLOUR OPTICAL SCANNER, according to claim 1 or 2, **characterised in that** the colour detector (43) is made up of RGB colour sensors.

4. THE AIRBORNE COLOUR OPTICAL SCANNER, according to claims 2 and 3, **characterised in that** the dichroic mirror (19) separates the spectral components of the laser pulse from the spectral components corresponding to the colours, separating the latter toward the colour detector (43) formed by RGB colour sensors, while the rest of the components pass through the same and through a filter (23) to the pulse detector (25) formed by a detector array (46) wherein the signal is amplified and filtered to acquire the time difference between the emission of the pulse and the reception thereof, in the electronic unit to where the pulse signal is sent, while the spectral components corresponding to colour reach the aforementioned RGB colour sensors of the colour detector (43), wherein the signal is amplified and filtered to also be sent to the electronic unit that samples the colour information at a high rate, with the aim of synchronising the arrival of the laser pulse with the colour value at the precise moment.

5. THE AIRBORNE COLOUR OPTICAL SCANNER, according to claims 2 to 4, **characterised in that** the dichroic mirror (19) has a selective wavelength, such that it is transparent at the Ai wavelengths of the laser beam and reflects the wavelengths corresponding to the colours, that is, between 780-380 nm.

6. THE AIRBORNE COLOUR OPTICAL SCANNER, according to any of claims 2 to 5, **characterised in that** the dichroic mirror (19) incorporates an optical filter (23) with a very narrow band, to the order of nanometres, such that the signal corresponding to the reflection of the pulse that passes through the aforementioned dichroic mirror (19) is filtered through an optical filter (23), with the aim of eliminating the spectral components that do not correspond to the emission of the λi laser.

7. THE AIRBORNE COLOUR OPTICAL SCANNER, according to any of claims 2 to 6, **characterised in that** it comprises a first optical group (40) to eliminate the optical aberrations of the filtered laser pulse and obtain better image quality in the pulse detector (25).

8. THE AIRBORNE COLOUR OPTICAL SCANNER, according to any of claims 2 to 7, **characterised in that** it comprises a second optical group (45) that reduces the optical aberrations of the image of the reception of the spectral components corresponding to the visible spectrum that are reflected by the dichroic mirror (19) and which adapt the size of the image to the colour detector (43), improving the image quality.

9. THE AIRBORNE COLOUR OPTICAL SCANNER, according to any of claims 1 to 10, **characterised in that** the colour detector (43) uses a photodetector array, wherein the signal of each detector is amplified and filtered in the amplification and filtering board (651) before being processed by the timer system (467) and the microcontroller (73) of the electronic unit to obtain colour for each pixel.

10. THE AIRBORNE COLOUR OPTICAL SCANNER, according to claim 9, **characterised in that** the electronic unit envisages a data buffer which stores the signal that digitises each colour detector (43), such that when a return pulse is received, it is possible to retrieve the colour value from the data buffer for the exact moment at which the return pulse was received.

11. THE AIRBORNE COLOUR OPTICAL SCANNER, according to claim 3, **characterised in that** the colour detector (43) uses a Bayer-type colour filter array to determine the colour of each area.

12. THE AIRBORNE COLOUR OPTICAL SCANNER, according to claim 2, **characterised in that** the colour detector (43) is made up of a Phillips-type trichroic prism with three colour detectors.
